Europäisches Patentamt

European Patent Office

Office européen des brevets

(19)

(11) Publication number: **0 246 843**
**A2**

(12) **EUROPEAN PATENT APPLICATION**

(21) Application number: **87304386.3**

(22) Date of filing: **18.05.87**

(51) Int. Cl.³: **A 01 K 77/00**
**A 01 K 97/14**

(30) Priority: **20.05.86 GB 8612268**
**07.06.86 GB 8613912**

(43) Date of publication of application:
**25.11.87 Bulletin 87/48**

(84) Designated Contracting States:
**AT BE CH DE ES FR IT LI LU NL SE**

(71) Applicant: **Skilton, David Charles**
**106 The Greenway Hurst Green**
**Oxted Surrey(GB)**

(71) Applicant: **Heath, Michael Frederick**
**24 The Glebe Leigh**
**Reigate Surrey(GB)**

(72) Inventor: **Skilton, David Charles**
**106 The Greenway Hurst Green**
**Oxted Surrey(GB)**

(74) Representative: **Fry, Alan Valentine**
**FRY HEATH & CO. Seloduct House 16-18 Station Road**
**Redhill Surrey RH1 1NF(GB)**

(54) **Improvements in or relating to landing devices.**

(57) A landing device for aquatic chordate animals includes integral with the landing device a device operable selectively to record the weight of a specimen held or retained by the landing device. In one arrangement, a landing net comprises an assembly of an elongate pole which carries at one end a support member from which is suspended a net and a weighing device operable selectively to record the weight of the net content and the display such weight of the net content and to display such weight visually on a display unit which forms part of the assembly.

FIG 1

EP 0 246 843 A2

Croydon Printing Company Ltd.

IMPROVEMENTS IN AND RELATING TO
LANDING DEVICES
------------------------------------

This invention relates to devices such as landing or keep nets, gaffes and the like for aquatic chordate animals, that is to say aquatic animals having endo-skeletons or exo-skeletons and to weighing devices to use with such landing devices. Aquatic chordate animals include, for example, salt and fresh water fish, eels, lobsters, crabs, turtles and crayfish.

Landing nets comprising a pole which carries at one end a support member in the form of a pair of arms or closed figure such as a ring from which is suspended a net are used by anglers to land fish. Hitherto, where the angler wishes to know the weight of a landed fish, the live fish is removed from the baited line by which it has been caught and transferred by hand to a bag provided with a drawstring passing through a series of rings which when drawn together enable the bag to be suspended from a spring-balance or the like to record the weight of the fish. The fish may then either be returned to the water or placed in a keep net.

While this procedure is acceptable to many anglers, it is both time-consuming and can be harmful to a fish because of the excessive handling which occurs. For night fishermen the problems involved in locating the various pieces of equipment and handling the fish can be onerous.

Modern fish farming practices also require the weight of fish specimens to be recorded. In these circumstances the procedure followed is similar to that identified above excepting that a fish is normally caught and landed by a net and then transferred to a balance where movement of the fish is restrained by means of, for example, a grill placed over the fish. This procedure can also lead to the weighed specimen being harmed before being returned to the water.

Similar problems can occur when the weight of, for example, a tropical fish specimen is to be recorded by an aquarium keeper.

For sea fishing and other occasions where, for example, fish are landed by hooks and gaffes or the like, although the landed fish is not normally returned to the water, the ability to record the weight of the landed fish would often be useful to the fisherman or angler.

The present invention sets out to provide a landing device for fish and other aquatic chordate animals which overcomes or at least alleviates many of the disadvantages and problems outlined above.

According to the present invention in one aspect there is provided a landing device for aquatic chordate animals which includes integral with the landing device means operable selectively to record the weight of a specimen held or retained by the landing device.

According to the present invention in another aspect there is provided a landing net comprising an assembly of an elongate pole which carries at one end a support member from which is suspended a net, the assembly including weighing means operable selectively to record the weight of the net content and to display such weight visually on a display unit which forms part of the assembly. The weight may be displayed by means of an illuminated LED digital display. Alternatively, the weight may be displayed by means of a needle movable in an arcuate sense over a suitably incremented scale.

The weighing means may comprise a calibrated spring or the like connected at one end directly or indirectly to the net support member, selective operation of the weighing means being achieved by disengaging the net support member partially or wholly from the pole thereby to place the net support member in operative engagement with the weighing means.

The net support member may include an elongate connection piece securable into abutting engagement with an end face of the weighing means by a threaded cap which co-operates with an externally threaded member forming part of the weighing means.

According to the present invention in a still further aspect, there is provided a weighing device adapted to be incorporated into a landing device such as a landing or keep net, a gaffe or the like, by which the weight of a fish held or retained by the landing device can be recorded, means being provided selectively at least partially to release the weighing device from the weighted end of the landing device to record the weight thereof.

The weighing means may comprise a calibrated spring or the like connected or connectable to one end directly or indirectly to the landing device, selective operation of the weighing means being achieved by disengaging one part of the landing device partially from the pole supporting the landing device thereby to place the landing device in operative engagement with the weighing means.

The invention will now be described by way of example with reference to the accompanying diagramatic drawings in which:-

Figure 1 illustrated a landing net in accordance with the invention;

Figure 2 is a section taken through one end of the pole of the landing net illustrated in Figure 1 to show details of the weighing mechanism employed; and

Figures 3 and 4 are respectively plan and side views of an alternative weighing device in accordance with the invention.

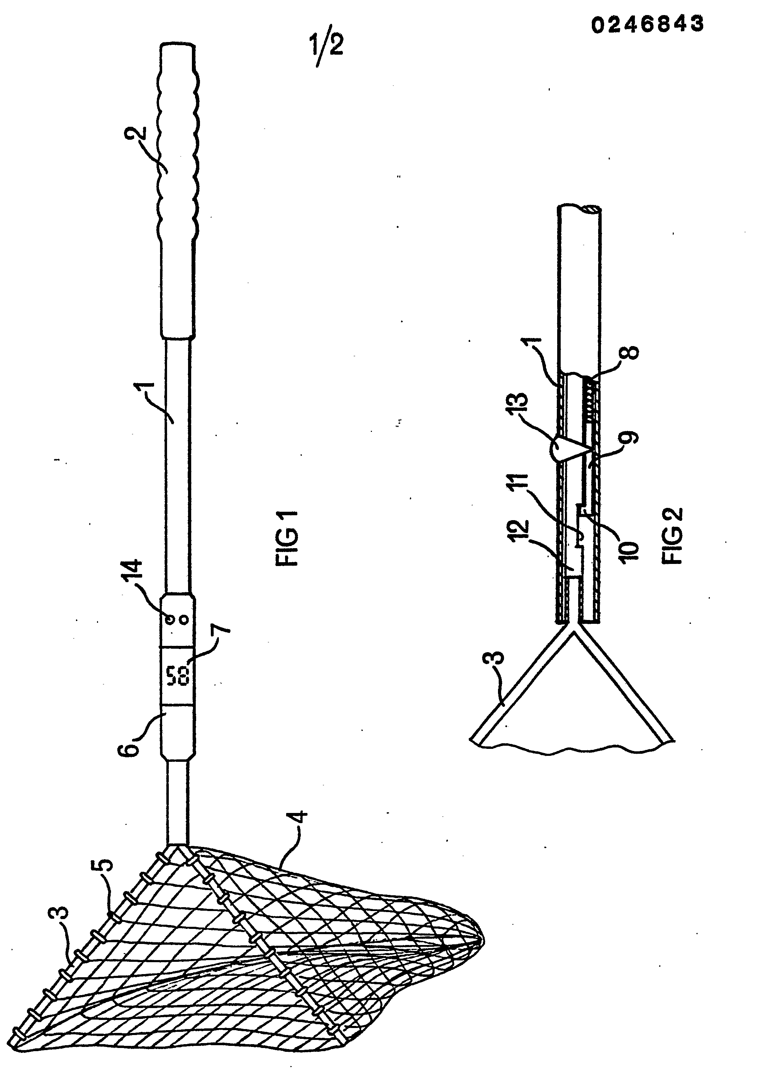

The landing net illustrated in Figures 1 and 2 of the drawings comprises an elongate pole 1 including a handle 2 which can be extended in a conventional manner to provide the length of pole required. Supported from the end of the pole 1 remote from the handle 2 is a support member 3 from which is suspended a net 4. The support member 3 may comprise a pair of divergent arms in the shape of the letter "V" or may define a closed figure of square, round, triangular or similar configuration. The net is suspended from the support member 3 by means of rings 5 which slide over the member 3.

An integral weighing device 6 is provided within the pole 1 and is operable to record the weight of a fish or other aquatic chordate animal retained within the net. The recorded weight is displayed on a display unit 7 positioned towards one end of the pole 1.

As will be seen from Figure 2, the weighing device comprises a calibrated spring 8 which is connected at one end to the pole 1 and at its other end to a slide 9. The slide 9 is formed at its end remote from the spring 8 with a spigot 10 which seats within a recess 11 set in an extension piece 12 to which the net support member 3 is connected. When the landing net is to be used for conventional purposes, the slide and extension piece are secured together by means of a catchment device 13. In this mode, the landing net assembly defines a relatively rigid construction similar to that of a conventional landing net.

When it is required to weigh the contents of the net 4 a member 14 adjacent the display unit 7 is lifted to move the catchment device 13 from its seating thereby partially to disengage the extension piece 12 and net support member 3 from the pole 1. When the pole is then held in an upright manner with the net closest to the ground, the calibrated spring 8 extends thereby to record the weight of the contents of the net 4. In this position, movement of a fish held in the net is restrained thereby enabling the weight to be recorded accurately. Once a weight has been recorded, the fish may be placed in a keep net or returned to the water and the extension piece 12 is then pushed into the end of the pole to re-engage the catchment device 13.

The manner in which extensions of a calibrated spring can be translated into readings of weight is well known and can be achieved by any conventional means. The weight of the extension piece 12, net support member 3 and the net 4 are taken into account when calibrating the spring. In addition to recording the weight of a fish or the like retained within the net 4, the visual display unit 7 may include a memory whereby the total weight of fish caught over a period of time can be memorised and recorded.

Preferably, the display unit 7 comprises an LED display to enable readings to be taken at night.

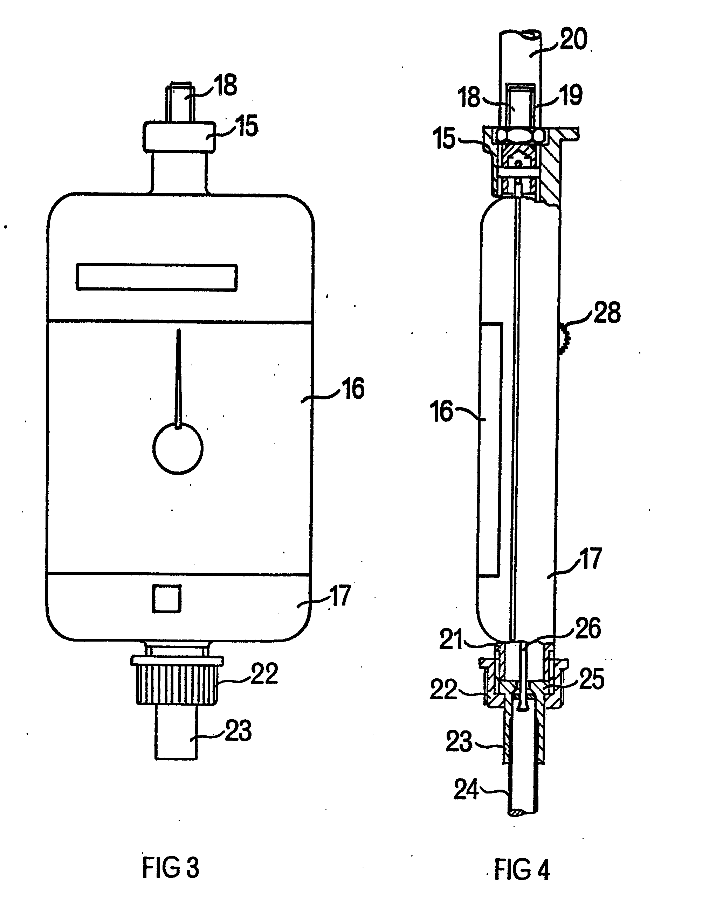

Turning now to Figures 3 and 4, the weighing device illustrated takes the form of an adaptor 15 which can be screwed or otherwise attached to a pole of a landing net, keep net or gaffe. Thus, an angler may adapt an existing landing device to include the weighing device and may selectively add or remove the weighing device from the landing device.

The device illustrated essentially comprises a conventional calibrated-spring scale 16 retained within a suitably strengthened casing 17 and formed at one end with a screw threaded male member 18 for connection to a threaded female member 19 located in one end of a conventional rod 20 of a landing net, gaffe or the like. Protruding from the other end of the casing 17 is a screw threaded male member 21 which co-operates with an internally threaded cap 22 to secure the casing selectively to an extension piece 23 of the respective net support member 24. The extension piece 23 has a flanged end 25 which seats within the cap 22 and is urged into contact with the free end of member 21 as the cap is tightened over the thread of the member 21. A wire 25 connected at one end to the calibrated spring (not shown) of the scale 16 is trapped at its other end within an aperture formed in the flanged end 25 of the extension piece 23.

The end of the extension piece 23 remote from the flange 25 is formed with an internal thread to receive the threaded end of the respective net support member 24.

As will be seen from Figure 4, a knurled knob 28 is positioned on the rear face of the casing 17 to enable the scale to be zeroed as and when necessary.

In use, the casing 17 is secured between the net or gaffe and the rod of a landing device by the

0246843

respective threaded members 19 and 21. When a catch has been made, the fish is netted or gaffed and the landing net or gaffe drawn onto the bank by the angler. The cap 22 is then unscrewed to release the extension piece 23 from the scale and the net or gaffe lifted by the rod 20 to record the weight of the fish present in the net or on the gaffe. After weighing, the cap 23 is re-located on the member 21 whereupon the landing device is once again ready for use in the conventional manner.

The invention also has application for weighing specie of chordate animals retained within aquaria. It will be appreciated that in this application, the sizes of net, pole etc will be considerably less than those normally associated with landing nets used by anglers.

Some means of releasing a fish or other animal retained within a weighing net may be provided to enable the animal to be returned to the water without it coming into contact with the hands of the operator. Thus a zip or the like may be provided within the net itself.

It is to be understood that the forgoing is merely exemplary of various embodiments of the invention and that modifications can be made to the apparatus described and illustrated without departing from the true scope of the invention as defined by the claims appended hereto. Thus a number of different ways of recording the weight of the contents of the net are possible, the particular ones described being merely exemplay of several possibilities. In addition, a weighing device as described may be incorporated into a keep net. Thus, a landed fish may quickly be transferred to such a keep net and its weight recorded by selectively operating the weighing means.

CLAIMS

1    A landing device for aquatic chordate animals which is characterised in that it includes integral with the landing device means operable selectively to record the weight of a specimen held or retained by the landing device.

2    A landing net comprising an assembly of an elongate pole which carries at one end a support member from which is suspended a net, the assembly being characterised in that it includes weighing means operable selectively to record the weight of the net content and to display such weight visually on a display unit which forms part of the assembly.

3    A landing net as claimed in Claim 2 characterised in that the display comprises an illuminated LED display.

4    A landing net as claimed in Claim 1 or claim 2 characterised in that the weighing means comprises a calibrated spring or the like connected at one end to the landing net, selective operation of the weighing means being achieved by disengaging one part of the landing net partially from the pole supporting the landing net thereby to place the landing net in operative engagement with the weighing means.

5    A weighing device adapted to be incorporated into a landing device such as a landing or keep net, a gaffe or the like, by which the weight of a fish held or retained by the landing device can be recorded, the weighing device being characterised in that means are provided selectively to at least partially release the weighing device from the weighted end of the landing device to record the weight thereof.

6    A weighing device as claimed in Claim 5 characterised in that the device includes threaded end pieces which can co-operate with threaded sections of a pole of a landing device and the net or gaffe of the device to incorporate the device into the landing device.

FIG 1

FIG 2

0246843

FIG 3

FIG 4